# EUROPEAN PATENT SPECIFICATION

(11) **EP 2 449 868 B1**
(45) Date of publication and mention of the grant of the patent: **17.04.2013**
(21) Application number: 10190202.1
(22) Date of filing: 05.11.2010
(51) Int. Cl.: A01B 59/00

(54) **Device for the provision of coupling elements**
Vorrichtung zur Bereitstellung von Kupplungselementen
Dispositif pour la fourniture d'éléments de couplage

(43) Date of publication of application: 09.05.2012
(73) Proprietor: CLAAS Tractor SAS, 78141 Velizy-Villacoublay (FR)
(72) Inventor: Pruvost, Franck, 77930 St. Sauver sur Ecole (FR)

(56) References cited:
- DE-B- 1 235 056
- DE-B1- 2 944 452
- DE-U1- 29 609 051
- DE-U1-202005 019 244
- GB-A- 906 761
- US-A1- 2007 014 497

## Description

The invention relates to a device for the provision of coupling elements on an agricultural machine according to the preamble of claim 1.

Agricultural machines, particularly tractors, are equipped with attachment devices for implements. These attachment devices are mostly embodied as so-called three-point coupling as for example described in EP 1 403 102 A1, substantially consisting of two lower control arms and one upper control arm. The control arms at their end facing away from the machine each have a coupling device, which accommodates a pin formed on the implement to be attached. To reduce wear and stresses on the machine parts to be coupled, axially secured coupling balls are pushed on to the pins of the implement, which upon attachment of the implement are accommodated by the coupling devices of the control arms.

Different implements can be attached to the tractor. Depending on the type of the implement, the pins at the implement end can have different diameters, which is why the associated coupling balls - with same outer diameter - have through-bores of different sizes.

In addition, the coupling devices of lower and upper control arms can have different outer diameters so that coupling balls of different size are required. In addition, there are coupling balls of different design, such as for example with and without cylindrical shoulders at the terminations of the through-bores and coupling balls, to which a catch plate is attached in order to facilitate the attachment of the implement to the tractor through a "catching aid" so created.

In summary, coupling elements of different type and size are required in practice. In order to always provide a fitting coupling element for different operating purposes, DE 20 2005 019 244 U1 proposes a storage device for coupling balls which can be fastened to the rear of an agricultural machine. The device comprises two longitudinally formed holding elements predetermining a guide, between which coupling balls of different type can be inserted. For removal, the balls are pushed to the opening of the guide at the end and can then be used as intended.

In order to prevent that the balls fall out of the guide a locking pin is provided at the end. In practice it must be seen as a disadvantage that for every removal it is necessary to remove the locking pin. To safely store the balls in the device during tractor operation, the pin must be reinstalled. This aggravates handling of the device. One-hand operation is difficult. In addition, the locking pin constitutes an additional component which on the one hand needs to be secured against loss and on the other hand is exposed to dirt accumulation due to the operation.

From DE 296 09 051 U1 there is known a device with a holding structure for accommodating a coupling element. The structure has an opening through which a coupling element can be inserted or removed. By inserting the coupling element, a latch is being actuated which holds the coupling element. In order to remove the coupling element, it is necessary to actuate separate actuation means.

It is an object of the present invention to state a device for providing coupling elements, particularly coupling balls, which device can be simply operated and has a low susceptibility to malfunctioning.

The mentioned object is solved with a device according to claim 1. Accordingly, the device is characterized in that the closure device comprises several closing elements which are moveable relative to one another, which through interaction delimit the opening in such a manner that its size is variable.

According to the invention it was initially recognised that coupling elements that are not used can be practically secured in the holding structure by means of a closure device. The closure device can be configured in different manners as long as it allows closing of the opening. In a further manner according to the invention, a constructively simple as well as effective implementation has been found for actuating the closure device, according to which said closure device can be actuated through the coupling element itself. There, the insertion or removal movement of the coupling element is utilized for actuating the closure device. Accordingly, the operator can move the coupling element through the opening of the holding structure if required by merely grasping the coupling element with one hand and performing an appropriate inserting or removing movement, as a result of which the closure device - triggered by the movement of the coupling element, particularly through contact forces between coupling element and closure device which occur in the process - opens or closes. Advantageous in this furthermore is that components to be additionally handled and susceptible to dirt accumulation - such as locking pins or the like - are no longer required and easier operation is created. According to the invention the closure device comprises a plurality of closing elements that are moveable relative to one another, which in interaction delimit the opening in such a manner that its size is variable. The closing elements, which in the process act like lips, thus together form an opening in the sense of a mouth whose size is variable through movement of the closing elements relative to one another.

The closing element of the closure device can advantageously be subjected to force in such a manner, that the coupling elements are held in the holding structure by non-positive connection. In order to always ensure secure and automatic closing, resetting means are advantageously associated with the closure device which - directly or indirectly - exert a resetting force on the closing elements which causes a movement of the closing elements reducing the size of the opening.

Through an opening embodied variable in size a closure device that is advantageous for the operating purpose is created, in which with an opening size that is smaller than a projection of a coupling element, insertion or removal of the coupling element is prevented (closed state of the closure device), and with an opening size that is greater than a projection of a coupling element, insertion or removal of the coupling element is made possible (opened state of the closure device).

To make possible actuation of the closure device through the coupling elements themselves, the closing elements are advantageously designed and arranged in such a manner that during an insertion or removal movement the coupling element comes in contact with the closing elements in such a manner that the latter - having overcome the counterforce of a resetting means - deflect in a direction enlarging the opening. To this end, the closing elements practically have suitable contact sections and are moveably mounted relative to the holding structure and/or embodied elastically deformable within themselves.

Practically in terms of design a plurality of guide elements holding the accommodated coupling element between them serve as limits of the holding structure. These guide elements can be variously configured, while these preferably predetermine a longitudinal guide channel within which a plurality of coupling elements can be held.

According to an advantageous further development of the invention, two guide elements with U-profilings facing each other serve as limits of the holding structure. Thus, a guide of the substantially ball-shaped coupling elements is created in a simple manner. To ensure a secure lateral hold of coupling elements having a ball-shaped basic body with axial through-bore for the pins of an implement, the spacing between the legs of the U-profiling advantageously corresponds approximately to the axial outer dimension (which for example corresponds to the length of the through-bore) of a coupling element.

Advantageously, the guide elements are moveable relative to each other. This can be realised in different ways, for example in that these are connected to each other to allow pivot movement. Alternatively, the guide elements at least in portions can be embodied elastically deformable, so that in this manner relative moveability is possible. An advantageous configuration provides that the closing elements are associated with the guide elements. To this end, the closing elements can for example be arranged on the guide elements or be embodied integrally with said guide elements (i.e. coincide with these), so that moveability of the guide elements relative to each other brings about relative moveability of the closing elements. There, one each of the closing elements is arranged at an end of a guide element facing the opening, so that the size of the opening formed is variable through the movement of the guide elements relative to each other.

Advantageously, in addition to coupling elements the holding structure is also suitable to accommodate adapter elements. The purpose of the latter is that coupling elements with smaller outer diameter can be accommodated in the holding structure.

The holding structure can be fastened to various regions of an agricultural machine. Advantageous is attachment to a rear or front machine region in order to guarantee comfortable availability of the coupling elements in the region of the attachment device, particularly a three-point coupling. Attachment to the rear axle housing of a tractor offers a particularly space-saving access possibility.

In the following, the invention is described in more detail making reference to the enclosed figures. This also yields additional details and advantages of the invention. It shows:
- Fig. 1: a schematic representation of a device according to the invention in lateral view,
- Fig. 2: a perspective view of a device according to the invention,
- Fig. 3: another perspective view of the device from Fig. 2.

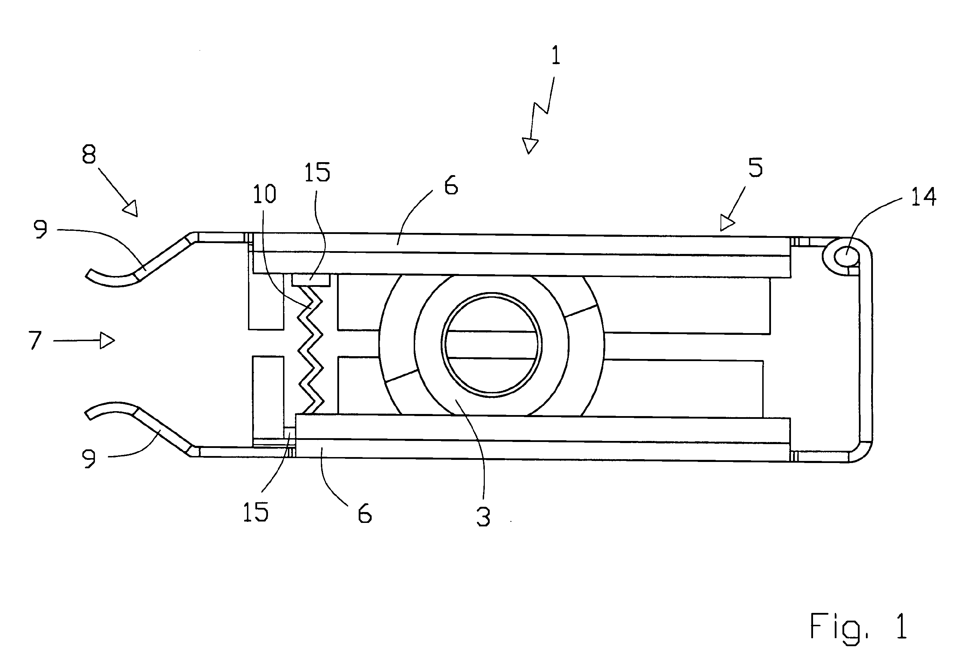

Fig. 1 shows schematically an exemplary embodiment of a device 1 according to the invention for the provision of coupling elements in lateral view. In the shown state the device 1 provides one coupling ball 3, but a plurality of coupling balls and/or coupling elements of a different type can also be provided therein.

The device 1 comprises a holding structure 5, which can be fastened to an agricultural machine such as a tractor which is not shown here. The holding structure 5 is suitable for accommodating one or a plurality of coupling balls 3, for the purpose of which the holding structure 5 comprises two rail-like guide elements 6, between which a coupling ball 3 is held. The holding structure 5 comprises an opening 7 through which the coupling ball 3 can be inserted in or removed from the holding structure 5. According to the invention, the device 1 is provided with a closure device 8 for the opening 7, which can be activated by inserting or removing the coupling ball 3. The construction and the function of the device 1 are described in more detail in the following.

The two guide elements 6 are connected to each other in a region facing away from the opening 7 in a manner allowing pivot movement about a pivot axis 14. At an end facing the opening 7, a closing element 9 each is associated with the guide elements 6 which in this case is embodied integrally with the respective guide element 6. The two closing elements 9 in the shown state of the closure device 8 converge in regions at an acute angle, opening again in a region facing away from the holding structure 5, while their surface sections facing each other delimit the size of the opening 7 of the holding structure 5 in the sense of closing lips. The guide elements 6 that can describe pivot movements relative to each other with the associated closing elements 9 together form a closure device 8. The opening 7 of the holding structure 5 delimited through interaction of the closing elements 9 is variable in size through the pivoting of the guide elements 6 relative to each other. The size of the opening 7 ("opening mouth") is delimited by the surface sections ("closing lips") of the two closing elements 9 facing each other.

In the shown state of the closure device 8 (closed state) the size of the opening 7 which is predetermined by the smallest spacing between the two closing elements 9, is smaller than the outer diameter of the coupling ball 3. The coupling ball 3 is therefore enclosed in the holding structure 5 and can merely move within the space delimited by the guide elements 6 and the closing elements 9. A spring 10 acting between the guide elements 6, which exerts a suitable resetting force, serves to maintain this closed state. The spring 10 exerts the resetting force via two spring mountings 15, each of which is arranged on one of the guide elements 6. The resetting force of the spring 10 additionally brings about that the coupling ball 3 is clamped between the guide elements 6. The clamping ensures a secure hold of the coupling ball 3 in the holding structure 5. In this way, particularly irritating knocking noises of the coupling ball 3 against the holding structure 5, which would otherwise be triggered through the vibrations of the machine, can be prevented.

According to the invention, the coupling ball 3 can be removed from the holding structure 5 (or inserted in this) in that the coupling ball 3 is manually pushed - i.e. by an operator-through the opening 7 using a certain expenditure of force. In the process, the coupling ball 3 contacts the closing elements 9 in such a manner that these pivot apart about the pivot axis 14 together with the guide elements 6 against the resetting force of the spring 10, while with growing angle between the guide elements 6 the opening 7 is enlarged. From reaching an opening size that is larger than the outer diameter of the coupling ball 3 (opened state) said coupling ball can be completely removed from (or inserted in) the holding structure 5. In this manner the opening 7 is associated with a closure device 8 that can be actuated through the insertion or removal of the coupling ball 3. In order to more preferably facilitate insertion of coupling elements, the curved course of the closing elements 9 opening funnel-like to the outside is provided, through which an insertion aid is created.

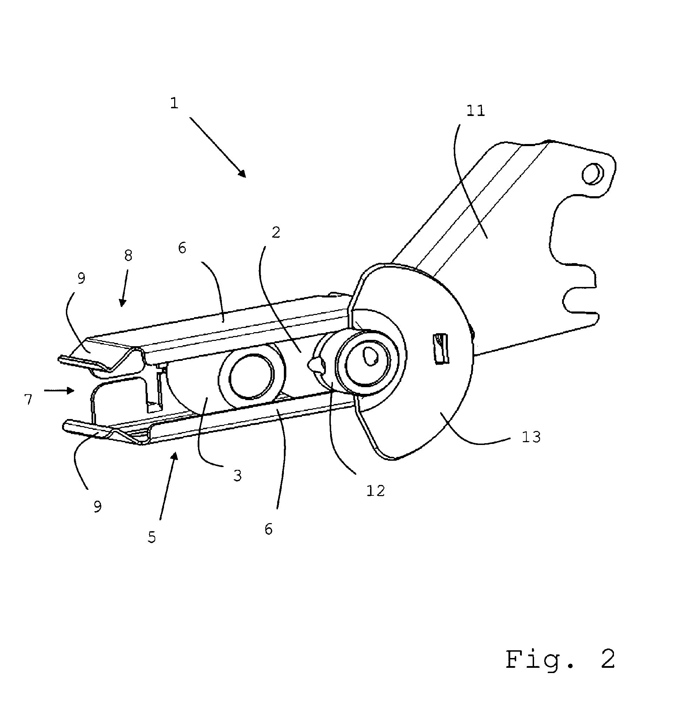

For further explanation, Fig. 2 shows a device 1 according to the invention with a similar construction in perspective view (obliquely from the front). Because of the similar construction and the similar mode of operation, deviating features are more preferably pointed out in the following.

In the holding structure 5 of the device 1 according to Fig. 2 are situated two commercially available coupling balls 2, 3 with approximately ball-shaped basic form and through-bores which are suitable for coupling an implement to a tractor. In contrast with the coupling ball 3 the coupling ball 2 additionally has a cylindrical shoulder 12 attached to which is a catch plate 13 facilitating coupling.

As is evident from this view the two guide elements 6 have U-profilings facing each other to ensure a lateral hold of the coupling balls 2, 3, which profilings extend in longitudinal direction of the guide elements 6. The spacing between the legs of the U-profilings of each guide element 6 corresponds to an axial outer dimension of the coupling balls 2, 3 so that the coupling balls 2, 3 are largely held in the holding structure 5 without axial play. Between the in the drawing view front legs respectively of the upper and lower guide element 6 there remains an opening gap through which the cylindrical shoulder 12 and the catch plate 13 of the coupling ball 2 can stand out of the holding structure 5 to the outside. Accordingly, the device 1 is also suitable for providing coupling balls with cylindrical shoulder 12 and/or with catch plate 13. A holding plate 11, which is fastened to the holding structure 5 serves for the fastening of the device 1 to an agricultural machine (not shown).

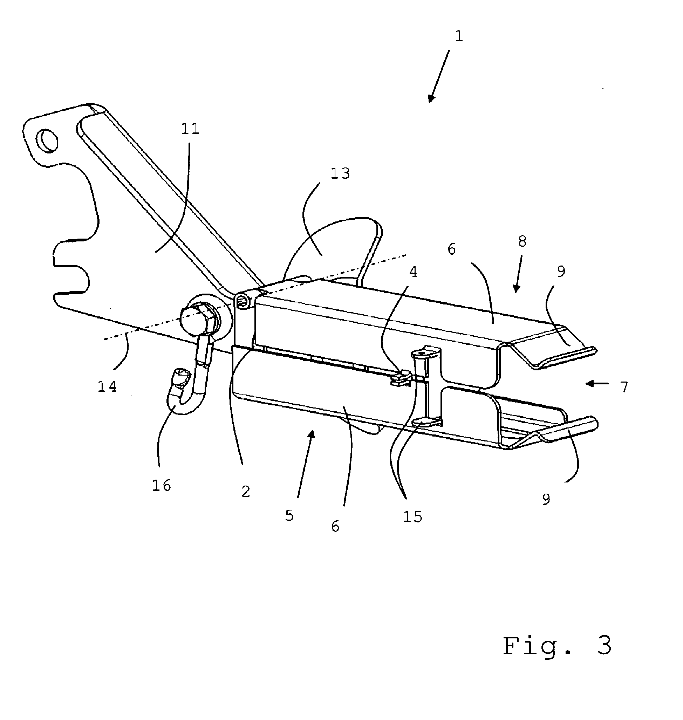

Fig. 3 shows the device 1 according to Fig. 2 from another perspective (obliquely from the rear). The holding plate 11 is connected to the lower holding element 6 in a fixed manner. The upper holding element 6 is rotatably mounted about the pivot axis 14 relative to the lower holding element 6. On removing or inserting coupling elements, contact between coupling element and closing elements 9 results in pivoting-out of the upper holding element 6 directed upwards relative to the lower holding element 6 held in a fixed manner. A resetting spring which is not shown here, which is preferably arranged between the spring mountings 15 of the upper and lower holding element, exerts a resetting force on the holding elements 6 which increases with growing opening 7 of the closure device 8. In order to avoid direct contact between upper and lower holding elements 6 in the unloaded state of the holding structure and avoid instances of jamming when operating the device 1, stops 4 are associated with the two holding elements 6 which ensure that a minimum spacing is maintained.

The holding structure 5 of the device 1 by means of the holding plate 11 can for example be attached to the rear axle housing of a tractor which is not shown. The holding plate 11 to this end comprises an open and a closed fastening hole on a region facing away from the holding structure 5. With such fastening the device 1 is preferentially located in a region between one of the rear wheels and the three-point attachment of the tractor in order to provide coupling elements for the operation of the tractor.

Obviously it is conceivable to attach the device to other suitable attachment locations of agricultural machines. Furthermore, numerous other configuration types more preferably of the holding structure and the closure device are conceivable, wherein actuation of the closure device is effected through the removal or insertion of the coupling elements themselves.

### List of reference numbers

- 1: Device
- 2: Coupling ball with catch plate
- 3: Coupling ball
- 4: Stop
- 5: Holding structure
- 6: Guide element
- 7: Opening
- 8: Closure device
- 9: Closing element
- 10: Spring
- 11: Holding plate
- 12: Cylindrical shoulder
- 13: Catch plate
- 14: Pivot axis
- 15: Spring mounting
- 16: Hook

## Claims

1. A device (1) for the provision of coupling elements (2, 3) on an agricultural machine, comprising a holding structure (5) that can be fastened to the machine for accommodating at least one coupling element (2, 3) within limits (6) predetermined by the holding structure (5), wherein the holding structure (5) has an opening (7) through which the coupling element (2, 3) can be inserted in and removed from the holding structure (5), wherein a closure device (8) is associated with the opening (7) which can be actuated by inserting or removing the coupling element (2, 3)
**characterized in that** the closure device (8) comprises several closing elements (9) which are moveable relative to one another, which through interaction delimit the opening (7) in such a manner that its size is variable.

2. The device according to claim 1, **characterized in that** resetting means (10) are associated with the closure device (8) which exert a resetting force on the closing elements (9) reducing the size of the opening (7).

3. The device according to claim 1 or 2, **characterized in that** with an opening size that is smaller than a projection of the coupling element (2, 3), insertion or removal of the coupling element (2, 3) is prevented and with an opening size that is larger than a projection of the coupling element (2, 3), insertion or removal of the coupling element (2, 3) is made possible.

4. The device according to any one of the claims 1 to 3, **characterized in that** the closing elements (9) are designed and arranged in such a manner, that during an insertion or removal movement of a coupling element (2, 3) through the opening (7) the coupling element (2, 3) comes in contact with the closing elements (9) in such a manner that these (9) deflect in a direction enlarging the opening (7).

5. The device according to any one of the claims 1 to 4, **characterized in that** several guide elements (6) which hold the accommodated coupling element (2, 3) between them serve as limits of the holding structure (5).

6. The device according to any one of the claims 1 to 5, **characterized in that** two guide elements (6) with U-profilings facing each other serve as limits of the holding structure (5), wherein a spacing between the legs of the U-profiling approximately corresponds to the axial outer dimension of a coupling element (2, 3).

7. The device according to claim 5 or 6, **characterized in that** the guide elements (6) are moveable relative to each other.

8. The device according to any one of the claims 5 to 7, **characterized in that** the closing elements (9) are associated with the guide elements (6).

9. The device according to any one of the claims 5 to 8, **characterized in that** one each of the closing elements (9) is arranged at an end of a guide element (6) facing the opening (7), so that the size of the opening (7) is variable through the movement of the guide elements (6) relative to each other.

## Patentansprüche

1. Einrichtung (1) zum Bereitstellen von Kupplungselementen (2, 3) an einer landwirtschaftlichen Maschine, wobei die Einrichtung eine Haltestruktur (5) umfasst, die an der Maschine befestigt werden kann, um wenigstens ein Kupplungselement (2, 3) innerhalb von durch die Haltestruktur (5) vorbestimmten Grenzen (6) aufzunehmen, wobei die Haltestruktur (5) eine Öffnung (7) hat, durch die das Kupplungselement (2, 3) in die Haltestruktur (5) eingesetzt und aus derselben entfernt werden kann, wobei mit der Öffnung (7) eine Verschlusseinrichtung (8) verknüpft ist, die durch ein Einsetzen oder Entfernen des Kupplungselementes (2, 3) betätigt werden kann,
**dadurch gekennzeichnet, dass** die Verschlusseinrichtung (8) mehrere Verschlusselemente (9), die im Verhältnis zueinander beweglich sind, umfasst, die durch eine Wechselwirkung die Öffnung (7) auf eine solche Weise begrenzen, dass ihre Öffnung veränderlich ist.

2. Einrichtung nach Anspruch 1, **dadurch gekennzeichnet, dass** mit der Verschlusseinrichtung (8) Rückstellmittel (10) verknüpft sind, die eine Rückstellkraft auf die Verschlusselemente (9) ausüben, welche die Größe der Öffnung (7) verringern.

3. Einrichtung nach Anspruch 1 oder 2, **dadurch gekennzeichnet, dass** mit einer Öffnungsgröße, die kleiner ist als ein Vorsprung des Kupplungselementes (2, 3), ein Einsetzen oder Entfernen des Kupplungselementes (2, 3) verhindert wird und mit einer Öffnungsgröße, die größer ist als ein Vorsprung des Kupplungselementes (2, 3), ein Einsetzen oder Entfernen des Kupplungselementes (2, 3) möglich gemacht wird.

4. Einrichtung nach einem der Ansprüche 1 bis 3, **dadurch gekennzeichnet, dass** die Verschlusselemente (9) auf eine solche Weise gestaltet und angeordnet sind, dass während einer Einsetzungs- oder Entfernungsbewegung eines Kupplungselementes (2, 3) durch die Öffnung (7) das Kupplungselement (2, 3) auf eine solche Weise in Berührung mit den Verschlusselementen (9) kommt, dass diese (9) in einer Richtung abgelenkt werden, welche die Öffnung (7) vergrößert.

5. Einrichtung nach einem der Ansprüche 1 bis 4, **dadurch gekennzeichnet, dass** mehrere Führungselemente (6), die das aufgenommene Kupplungselement (2, 3) zwischen sich halten, als Grenzen der Haltestruktur (5) dienen.

6. Einrichtung nach einem der Ansprüche 1 bis 5, **dadurch gekennzeichnet, dass** zwei Führungselemente (6) mit U-Profilierungen, die einander gegenüberliegen, als Grenzen der Haltestruktur (5) dienen, wobei ein Abstand zwischen den Schenkeln der U-Profilierung annähernd der axialen Außenabmessung eines Kupplungselementes (2, 3) entspricht.

7. Einrichtung nach Anspruch 5 oder 6, **dadurch gekennzeichnet, dass** die Führungselemente (6) im Verhältnis zueinander beweglich sind.

8. Einrichtung nach einem der Ansprüche 5 bis 7, **dadurch gekennzeichnet, dass** die Verschlusselemente (9) mit den Führungselementen (6) verknüpft sind.

9. Einrichtung nach einem der Ansprüche 5 bis 8, **dadurch gekennzeichnet, dass** jeweils eines der Verschlusselemente (9) an einem Ende eines Führungselementes (6), das der Öffnung (7) gegenüberliegt, angeordnet ist, so dass die Größe der Öffnung (7) durch die Bewegung der Führungselemente (6) im Verhältnis zueinander veränderlich ist.

## Revendications

1. Dispositif (1) pour la mise à disposition d'éléments d'accouplement (2, 3) sur une machine agricole, comprenant une structure de maintien (5) qui peut être fixée à la machine pour recevoir au moins un élément d'accouplement (2, 3) dans des limites (6) prédéterminées par la structure de maintien (5), la structure de maintien (5) présentant une ouverture (7) à travers laquelle l'élément d'accouplement (2, 3) peut être inséré dans la structure de maintien (5) et retiré de celle-ci, un dispositif de fermeture (8) étant associé à l'ouverture (7), lequel peut être actionné par l'insertion ou le retrait de l'élément d'accouplement (2, 3), **caractérisé en ce que** le dispositif de fermeture (8) comprend plusieurs éléments de fermeture (9) qui sont mobiles les uns par rapport aux autres et qui, par leur interaction, délimitent l'ouverture (7) de manière que sa taille soit variable.

2. Dispositif selon la revendication 1, **caractérisé en ce qu'**au dispositif de fermeture (8) est associé un moyen de rappel (10) qui exerce sur les éléments de fermeture (9) une force de rappel qui réduit la taille de l'ouverture (7).

3. Dispositif selon la revendication 1 ou 2, **caractérisé en ce que**, avec une taille d'ouverture plus petite qu'une saillie de l'élément d'accouplement (2, 3), l'insertion ou le retrait de l'élément d'accouplement (2, 3) est empêché et, avec une taille d'ouverture plus grande qu'une saillie de l'élément d'accouplement (2, 3), l'insertion ou le retrait de l'élément d'accouplement (2, 3) est permis.

4. Dispositif selon une quelconque des revendications 1 à 3, **caractérisé en ce que** les éléments de fermeture (9) sont conçus et disposés de manière que, lors d'un mouvement d'insertion ou de retrait d'un élément d'accouplement (2, 3) à travers l'ouverture (7), l'élément d'accouplement (2, 3) entre en contact avec les éléments de fermeture (9), de façon que ceux-ci (9) soient déviés dans une direction qui agrandit l'ouverture (7).

5. Dispositif selon une quelconque des revendications 1 à 4, **caractérisé en ce que** plusieurs éléments de guidage (6), qui maintiennent entre eux l'élément d'accouplement (2, 3) reçu, servent de limites de la structure de maintien (5).

6. Dispositif selon une quelconque des revendications 1 à 5, **caractérisé en ce que** deux éléments de guidage (6) avec des profils en U en vis-à-vis servent de limites de la structure de maintien (5), l'espacement entre les branches du profil en U correspondant approximativement à la dimension axiale extérieure d'un élément d'accouplement (2, 3).

7. Dispositif selon la revendication 5 ou 6, **caractérisé en ce que** les éléments de guidage (6) sont mobiles l'un par rapport à l'autre.

8. Dispositif selon une quelconque des revendications 5 à 7, **caractérisé en ce que** les éléments de fermeture (9) sont associés aux éléments de guidage (6).

9. Dispositif selon une quelconque des revendications 5 à 8, **caractérisé en ce que** chacun des éléments de fermeture (9) est disposé à une extrémité d'un élément de guidage (6) tournée vers l'ouverture (7), de sorte que la taille de l'ouverture (7) est variable grâce au mouvement des éléments de guidage (6) l'un par rapport à l'autre.
